# EUROPÄISCHE PATENTSCHRIFT

(11) **EP 0 459 942 B1**
(45) Veröffentlichungstag und Bekanntmachung des Hinweises auf die Patenterteilung: **22.02.1995**
(21) Anmeldenummer: 91810332.6
(22) Anmeldetag: 30.04.1991
(51) Int. Cl.: C09D 11/00

(54) **Tinten**
Inks
Encres

(30) Priorität: 10.05.1990 CH 1587/90
(43) Veröffentlichungstag der Anmeldung: 04.12.1991
(73) Patentinhaber: CIBA-GEIGY AG, 4002 Basel (CH)
(72) Erfinder: Vieira, Eric, Dr., CH-4053 Basel (CH); Leppard, David G., Dr., CH-1723 Marly (CH); Laver, Hugh Stephen, Dr., CH-1700 Fribourg (CH); Toan, Vien Van, Dr., CH-1745 Lentigny (CH)

(56) Entgegenhaltungen:
- GB-A- 2 088 777
- US-A- 4 256 493

## Beschreibung

Die vorliegende Erfindung betrifft neue Tinten, insbesondere solche für das Tintenstrahldruckverfahren.

Tinten, einschliesslich solcher, die für das Tintenstrahldruckverfahren geeignet sind, enthalten üblicherweise wasserlösliche Farbstoffe. Diese wasserlöslichen Farbstoffe besitzen aber durchweg eine geringere Lichtechtheit als z.B. die in konventionellen Druckverfahren verwendeten Farbpigmente. Als Folge davon sind die mittels Tintenstrahldruck hergestellten Aufzeichnungen unter Lichteinwirkung nur beschränkt lagerfähig. Bei längerer Lagerung unter Licht beginnen sie auszubleichen oder sich zu verfärben.

Um dieses Problem zu lösen, wurde beispielsweise in US-A-4,256,493 vorgeschlagen, Tinten einen wasserlöslichen UV-Absorber vom Typ sulfonierter Hydroxybenzophenone zuzusetzen. Auch die Metallsalze solcher Verbindungen werden in JP-A-6277/88 als Lichtschutzadditive für Tinten für den Tintenstrahldruck vorgeschlagen. Solche Benzophenonderivate und deren Salze besitzen jedoch den Nachteil, dass sie mit bestimmten Farbstoffen, vor allem schwarzen Farbstoffen, Verfärbungen verursachen. Ferner beschreibt die JP-A-57-207659 die Verwendung von Dihydroxybenzolen als Stabilisatoren. Die Gallussäure und 3,5-Dimethoxy-4-hydroxy-benzoesäure sind hier ebenfalls genannt. Aus JP-A-62-106971 ist der Einsatz von Dialkylhydrochinonen, wie z.B. 2,5-Di-t.-amylhydrochinon, bekannt. Daneben ist hier auch die Verwendung des Natriumsalzes von 2-Hydroxy-4-methoxy-5-sulfobenzophenon und 2,2'-Dihydroxy-4,4'-dimethoxy-5-sulfobenzophenon beschrieben. N-Alkanolaminsalze der m-Digallussäure sind in JP-A-58-183769 als Tintenzusätze für den Tintenstrahldruck beschrieben. Ferner beschreibt GB-A-2 088 777 wasserunlösliche Phenolderivate und ihre Verwendung in Aufzeichnungsmaterialien für den Tintenstrahldruck.

Es wurden nun weitere Phenolderivate gefunden, die sich gut zur Verwendung in Tinten eignen und damit hergestellte Drucke stabilisieren können.

Gegenstand der vorliegenden Anmeldung ist somit eine Tinte, die mindestens eine wasserlösliche Verbindung der Formel 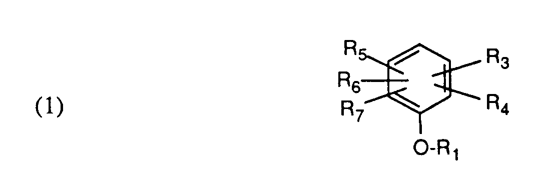
enthalten, worin
R₁ Wasserstoff, Alkyl mit 1 bis 4 Kohlenstoffatomen, Allyl oder -CO-CH₃ ist,
R₃ und R₄ unabhängig voneinander Wasserstoff oder -CO₂^{⊖}M^{⊕} und
R₅, R₆ und R₇ unabhängig voneinander Wasserstoff, Alkyl mit je 1 bis 8 Kohlenstoffatomen, mit -CO₂R₈, -CO₂^{⊖}M^{⊕} oder Phenyl substituiertes Alkyl mit je 1 bis 8 Kohlenstoffatomen oder -CO₂R₈ sind,
R₈ eine Gruppe der Formel 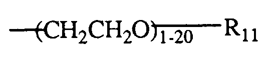
ist, worin R₁₁ Wasserstoff, Alkyl mit 1 bis 4 Kohlenstoffatomen oder eine Gruppe der Formel 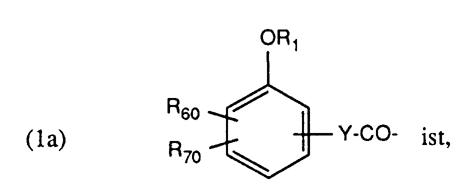
worin R₁ die angegebenen Bedeutungen hat, Y eine direkte Bindung oder Alkylen mit 1 bis 8 Kohlenstoffatomen ist, und R₆₀ und R₇₀ unabhängig voneinander Wasserstoff oder Alkyl mit je 1 bis 8 Kohlenstoffatomen sind,
M^{⊕} ein ein-, zwei- oder dreiwertiges Metallkation, H^{⊕} oder eine Gruppe der Formel ^{⊕}N(R₁₇)(R₁₂)(R₁₃)(R₁₄) ist, worin R₁₇, R₁₂, R₁₃ und R₁₄ unabhängig voneinander Wasserstoff, Alkyl je mit 1 bis 8 Kohlenstoffatomen, mit 1 bis 3 Hydroxylgruppen substituiertes oder durch Sauerstoff unterbrochenes Alkyl mit 2 bis 8 Kohlenstoffatomen, Alkenyl mit je 3 bis 5 Kohlenstoffatomen oder Benzyl sind, wobei mindestens einer der Substituenten R₃ bis R₇ -CO₂^{⊖}M^{⊕} oder -CO₂R₈ ist.

Gegenstand der vorliegenden Erfindung ist auch ein Aufzeichnungsmaterial, das mindestens eine Verbindung der Formel (1) enthält, ein Verfahren zum Stabilisieren von Tintenstrahldrucken sowie die neuen Verbindungen der Formel (1d).

R₁ bedeutet neben Wasserstoff, Alkyl mit 1 bis 4 Kohlenstoffatomen wie Methyl, Aethyl, Propyl, sek.Propyl, Butyl und tert.Butyl. Ferner kann R₁ für Allyl oder -CO-CH₃ stehen.

Die Substituenten R₅, R₆ und R₇ bedeuten unabhängig voneinander neben Wasserstoff Alkyl mit 1 bis 8 Kohlenstoffatomen, also beispielsweise Methyl, Aethyl, Butyl, Hexyl, Heptyl, Octyl und entsprechende verzweigte Isomere. Als Substituenten für diese Alkylreste können solche der Formeln -CO₂R₈ und -CO₂^{⊖}M^{⊕} sowie Phenyl in Frage kommen. Des weiteren können R₅, R₆ und R₇ auch -CO₂R₈ bedeuten.

R₈ ist eine Gruppe der Formel 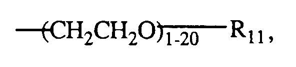
worin R₁₁ Wasserstoff oder Alkyl mit 1 bis 4 Kohlenstoffatomen wie Methyl, Aethyl oder Butyl ist. Ferner kann R₁₁ eine Gruppe der Formel 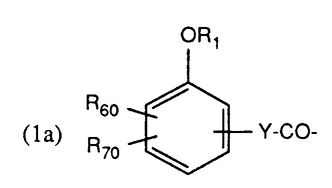
sein, worin
R₁ die angegebene Bedeutung hat, Y eine direkte Bindung oder Alkylen mit 1 bis 8 Kohlenstoffatomen wie z.B. Methylen, Aethylen, Butylen, Hexylen, Octylen und auch verzweigte Reste wie -C(CH₃)₂-CH₂- und -C(CH₃)₂-CH₂-CH₂-CH₂- bedeutet, und R₆₀ und R₇₀ unabhängig voneinander Wasserstoff oder Alkyl mit je 1 bis 8 Kohlenstoffatomen sind.

In den angegebenen Bedeutungen ist M^{⊕} ein ein-, zwei- oder dreiwertiges Metallkation wie Li^{⊕}, Na^{⊕}, K^{⊕}, Mg^{2⊕}, Ca^{2⊕}, Ba^{2⊕}, Zn^{2⊕}, Al^{3⊕}, Cr^{3⊕} und Fe^{3⊕}, ferner H^{⊕} oder eine Ammoniumgruppe der Formel ^{⊕}N(R₁₇)(R₁₂)(R₁₃)(R₁₄), worin R₁₇, R₁₂, R₁₃ und R₁₄ unabhängig voneinander Wasserstoff, Alkyl mit 1 bis 8 Kohlenstoffatomen, mit 1 bis 3 Hydroxylgruppen substituiertes oder durch Sauerstoff unterbrochenes Alkyl mit 2 bis 8 Kohlenstoffatomen, Alkenyl mit 3 bis 5 Kohlenstoffatomen oder Benzyl sind. Beispiele für Alkyl- und Alkylengruppen, die für die Substituenten R₁₇, R₁₂, R₁₃ und R₁₄ geeignet sind, können den obigen Definitionen für R₁ und R₂ entnommen werden.

Die erfindungsgemässen Tinten zeichnen sich durch eine gute Stabilität gegen Lichteinwirkung aus. Sie können z.B. für Filzstifte, Stempelkissen, Füllfederhalter und sog. Pen Plotters sowie in Offsetdruck-, Buchdruck-, Flexodruck- und Tiefdruckverfahren wie auch in Farbbändern für den Punktmatrix- und Schönschreiberdruck verwendet werden. Vorzugsweise finden sie in Tintenstrahldruckverfahren Anwendung.

Bei den heutigen Tintenstrahldruckverfahren verwendeten Druckern unterscheidet man solche mit kontinuierlichem Tintenstrahl und "Drop-on-demand"-Drucker, insbesondere "Bubble-jet"-Drucker. Fur diese Drucker lässt sich die erfindungsgemässe Tinte verwenden. Bedruckt werden vor allem Tintenstrahldruckpapiere und -folien.

Die erfindungsgemässen Tinten können wasserlösliche Lösungsmittel, wie z.B. Mono-, Di-, Tri- oder höhere Ethylenglykole, Propylenglykol, Butandiol-1,4, oder Ether solcher Glykole, Thiodiglykol, Glycerin und dessen Ether und Ester, Polyglycerin, Mono-, Di- und Triethanolamin, Propanolamin, Dimethylformamid, Dimethylsulfoxid, Dimethylacetamid, N-Methylpyrrolidon, 1,3-Dimethylimidazolidon, Methanol, Ethanol, Isopropanol, n-Propanol, Diacetonalkohol, Aceton, Methyl-ethyl-keton oder Propylencarbonat enthalten.

Die erfindungsgemässen Tinten enthalten Farbstoffe, wie sie auch für das Färben von natürlichen Fasern bekannt sind. Als Beispiele seien Monoazo-, Disazo- oder Polyazofarbstoffe, Reaktivfarbstoffe, Triphenylmethanfarbstoffe, Xanthenfarbstoffe oder Phthalocyaninfarbstoffe genannt. Spezielle Beispiele hierfür sind Food Black 2, C.I. Direct Black 19, C.I. Sulphur Black 1, Acid Red 35, Acid Red 14, Acid Red 52, Acid Yellow 17, Acid Yellow 23 und Kupfer-Phthalocyanine, ferner Direct Black 38, Direct Black 168, Acid Red 249, Direct Red 227, Direct Yellow 86, Direct Yellow 132, Acid Blue 9, Direct Blue 86 und Direct Blue 199 sowie Reactive Red 40, und die in EP-A-366 121 genannten Azofarbstoffe.

Die Tinten können auch übliche weitere Zusätze enthalten, wie z.B. Bindemittel, Tenside, Biocide, Korrosionsinhibitoren, Sequestriermittel, pH-Puffer oder Leitfähigkeitszusätze. Sie können auch weitere UV-Absorber oder Lichtschutzmittel enthalten. Im allgemeinen genügt jedoch die erfindungsgemässe Zugabe eines Stabilisators der Formel (1) zur Stabilisierung zur Tinte.

Insbesondere für den kontinuierlichen Tintenstrahldruck eignen sich Tinten auf Lösungsmittelbasis. Beispielsweise werden als Lösungsmittel kurzkettige Alkohole, Ketone oder Cellosolven verwendet. Für solche Tinten geeignete Farbstoffe sind vor allem C.I. "Solvent" und "Disperse" Farbstoffe. Des weiteren enthalten solche Tinten in der Regel weitere Additive, welche z.B. die Viskosität, Oberflächenspannung oder Leitfähigkeit der Tinten verbessern. Filmbildende Bindemittel wie Cellulosenitrat, Celluloseacetatphthalat und Styrol-Maleinsäurecopolymere können ebenfalls in den Tinten vorhanden sein.

Tinten, welche sich vorzugsweise zur Verwendung in "Drop-on-demand"-Druckern eignen, sind solche auf Basis von Wachsmischungen. Sie sind bei Temperaturen unter etwa 50°C fest. Der gewünschte Schmelzpunkt sowie Härte und Viskositätseigenschaften ergeben sich durch entsprechende Mischungen aus verschiedenen Wachsen. Beispielsweise kommen hierfür in Frage: Carnuba-, Montan-, Paraffin- und Silikonwachse, ferner Fettsäureester und Fettsäureamide. Auch diesen Tinten können Zusätze wie Antioxidantien, Polymere und die für die Tinten auf Lösungsmittelbasis genannten Additive beigefügt werden.

Sowohl für die Tinten auf Lösungsmittelbasis als auch für die Tinten auf Wachsbasis eignen sich insbesondere solche Verbindungen der Formel (1) als Stabilisator, welche sich gut in organischen Lösungsmitteln lösen.

Ferner sind Tintenstrahldrucktinten bekannt, die aus mehr als einer Phase bestehen. In JP-A-0 1170 675, 0 1182 379, 0 1182 380, 0 1182 381 und 0 1193 376 sind Tinten, die aus einer wässrigen Phase, worin der Farbstoff gelöst ist, und einer Emulsion von Oeltropfen, die UV-Absorber und gegebenenfalls auch Antioxidantien enthalten, beschrieben. In JP-A-0 1170 673 und 0 1182 382 ist die UV-Absorber enthaltende Oelphase mikroenkapsuliert und der Farbstoff in der wässrigen Phase gelöst. Oellösliche Farbstoffe hingegen können zusammen mit UV-Absorber und gegebenenfalls Antioxidanten in einem Oel gelöst werden. Das Oel wird entweder in einer wässrigen Phase emulgiert oder dispergiert wie z.B. in JP-A-0 1170 674 und 0 1170 672 beschrieben ist. Die Verbindungen der Formel (1) eignen sich bestens zur Stabilisierung solcher Tinten; sie sind wasserlöslich und können in der wässrigen Phase gelöst werden.

Die erfindungsgemässen Tinten enthalten vorzugsweise 0,01-30 Gew-%, insbesondere 0,1-20 Gew.-% mindestens einer Verbindung der Formel (1).

In einer Gruppe bevorzugter Tinten ist in der Verbindung der Formel (1) R₁ Wasserstoff oder Alkyl mit 1 bis 4 Kohlenstoffatomen und R₃ und R₄ sind unabhängig voneinander Wasserstoff oder -CO₂^{⊖}M^{⊕}, R₅, R₆ und R₇ unabhängig voneinander Wasserstoff, Alkyl mit je 1 bis 8 Kohlenstoffatomen oder mit -CO₂^{⊖}M^{⊕} oder Phenyl substituiertes Alkyl mit je 1 bis 8 Kohlenstoffatomen und M^{⊕} ist ein einwertiges Metallkation oder H^{⊕}.

Ferner werden Tinten bevorzugt, worin in der Verbindung der Formel (1) R₁, R₃, R₅ und R₆ Wasserstoff sind, und R₇ Alkyl mit 1 bis 8 Kohlenstoffatomen und R₄ -CO₂^{⊖}M^{⊕} ist.

Gut geeignet sind auch Tinten, worin die Verbindung der Formel (1) der Formel (1b) oder (1c) entspricht, worin M^{⊕}, R₅ und R₆ die angegebene Bedeutung haben, und R₁₁ Wasserstoff oder Methyl ist.

Beispiele für zur Verwendung in Aufzeichnungsmaterialien und Tinten geeignete wasserlösliche Verbindungen der Formel (1) sind solche der Formeln 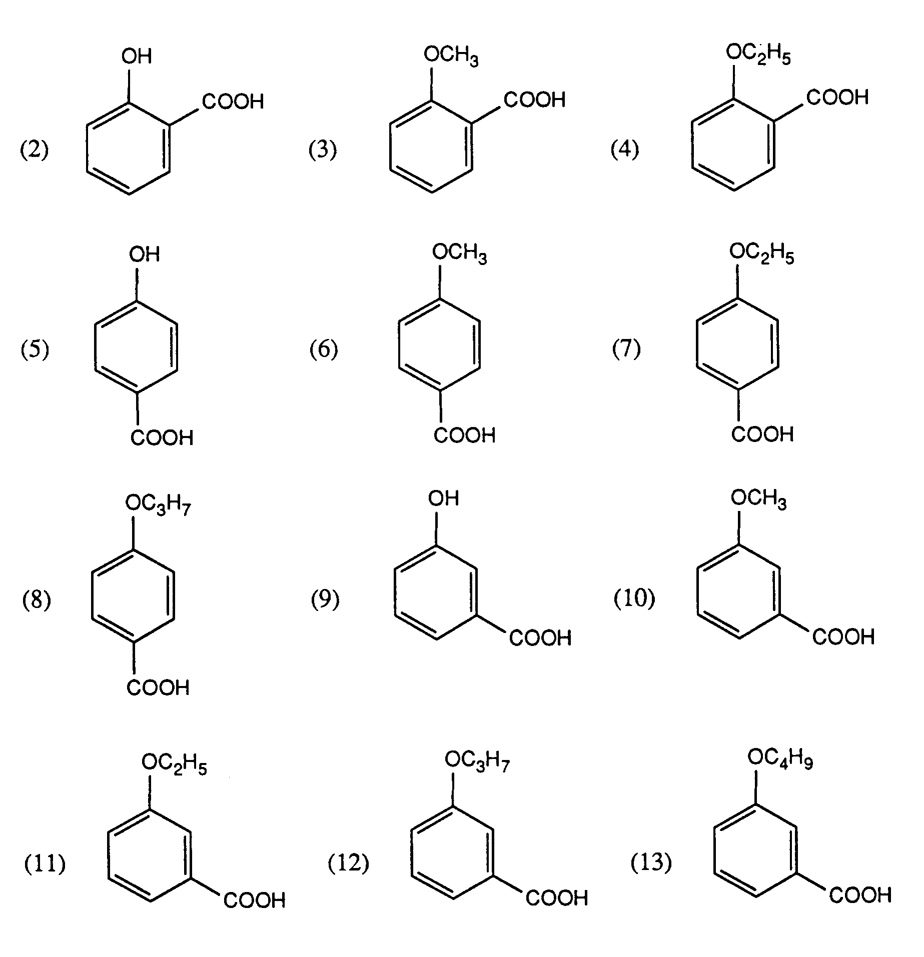 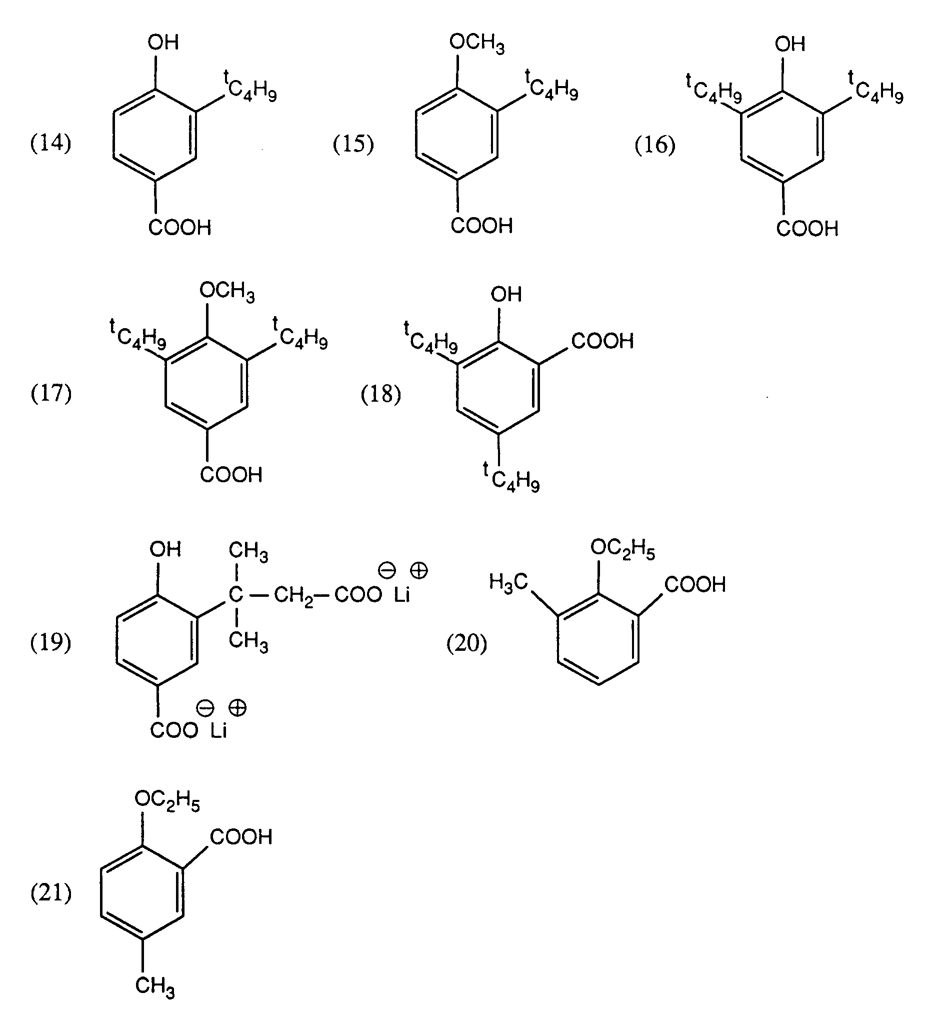
Die Einarbeitung dieser Verbindungen in Tinten und Aufzeichnungsmaterialien erfolgt vorzugsweise in Gegenwart von Basen wie Lithium- oder Kaliumhydroxid.

Weitere Beispiele von Verbindungen der Formel (1) entsprechen den Formeln 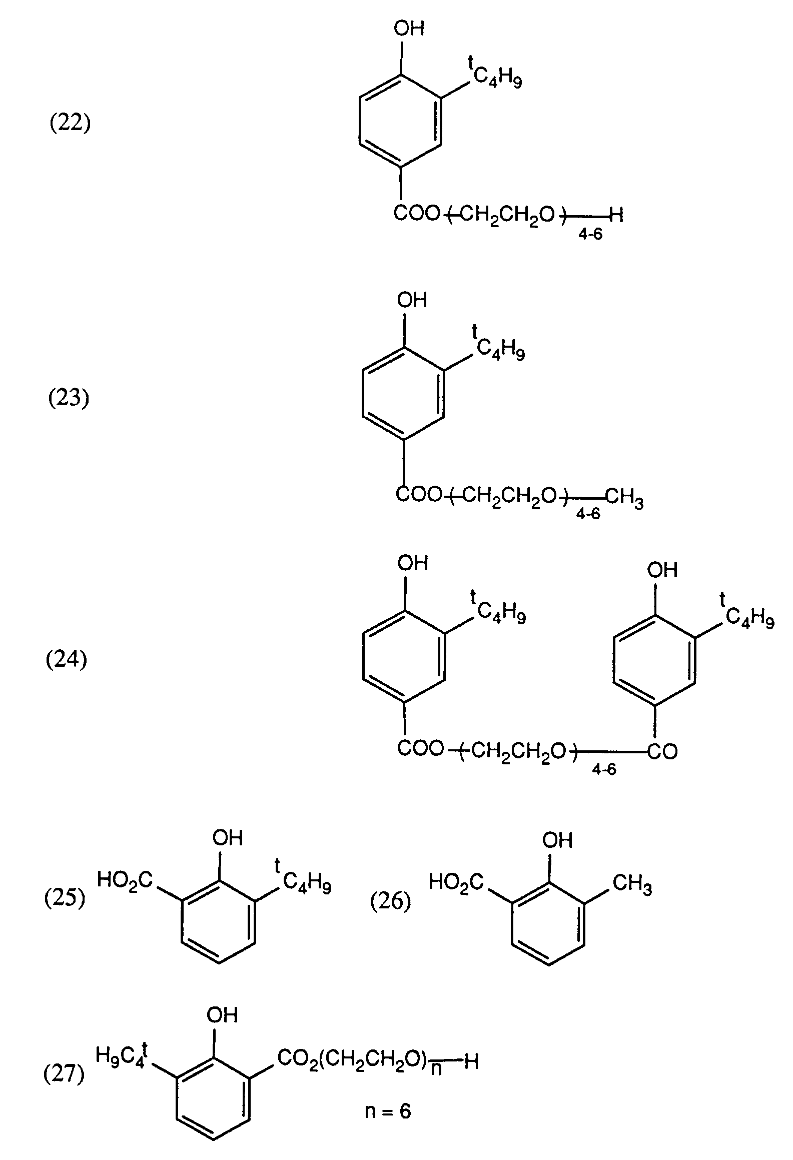
Die erfindungsgemässen Aufzeichnungsmaterialien, die vorzugsweise für das Tintenstrahldruckverfahren verwendet werden und welche eine Verbindung der Formel (1) enthalten, bestehen aus einem Träger mit einer durch Tintenstrahl bedruckbaren Oberfläche. Der Träger ist üblicherweise Papier oder eine Plastikfolie und normalerweise auf einer Seite mit einem Material beschichtet, das für Tinten aufnahmefähig ist. Vorzugsweise enthält diese Schicht SiO₂ und Polyvinylalkohol.

Unbeschichtetes Papier kann ebenfalls eingesetzt werden. Hier dient das Papier gleichzeitig als Trägermaterial und Tintenaufnahmeschicht. Ferner lassen sich auch Materialien aus Cellulosefasern und textile Fasermaterialien, beispielsweise Baumwollgewebe oder Baumwollmischgewebe aus Baumwolle und Polyacrylamid oder Polyester, welche Verbindungen der Formel (1) enthalten, für den Tintenstrahldruck verwenden.

Die Aufzeichnungsmaterialien können auch transparent sein, wie im Falle von Projektionsfolien.

Die Verbindungen der Formel (1) können bereits bei der Herstellung des Trägenmaterials in dieses eingearbeitet werden, beispielsweise bei der Herstellung von Papier durch Zusatz in die Papiermasse. Eine zweite Applikationsmethode ist das Besprühen des Trägermaterials mit einer Lösung der Verbindungen der Formel (1). Hierbei handelt es sich um eine wässrige Lösung oder eine Lösung in einem leicht flüchtigen organischen Lösungsmittel. Speziell im Falle öllöslicher Verbindungen der Formel (1) eignet sich das Aufsprühen von bzw. Tränken des Materials mit einer organischen Lösung einer Verbindung der Formel (1). Des weiteren bietet sich die Verwendung von Emulsionen bzw. Dispersionen an.

Meist wird jedoch eine farbstoffaffine Beschichtungsmasse auf das Trägermaterial aufgebracht, und in diesem Fall setzt man die Verbindungen der Formel (1) dieser Beschichtungsmasse zu. Die Beschichtungsmassen bestehen in der Regel aus einem festen Füllstoff, einem Bindemittel sowie üblichen Additiven.

Der Füllstoff ist mengenmässig der Hauptbestandteil der Beschichtungsmasse. Beispiele für Füllstoffe, die in Frage kommen, sind SiO₂, Kaolin, Talk, Ton, Ca-, Mg- oder Al-Silikate, Gips, Zeolith, Bentonit, Diatomenerde, Vermiculit, Stärke oder das in JP-A-60-260 377 beschriebene oberflächenmodifizierte SiO₂. Geringe Mengen an weissen Pigmenten, wie z.B. Titandioxid, Baryt, Magnesiumoxid, Kalk, Kreide oder Magnesiumcarbonat können mit dem Füllstoff in der Beschichtungsmasse verwendet werden, sofern sie die Dichte des Tintenstrahldrucks nicht stark herabsetzen.

Beschichtungsmassen, die für transparente, projektionsfähige Aufzeichnungsmaterialien bestimmt sind, können keine Licht streuende Teilchen, wie Pigmente und Füllstoffe, enthalten.

Das Bindemittel bindet die Füllstoffe unter sich und an das Trägermaterial. Beispiele für gebräuchliche Bindemittel sind wasserlösliche Polymere, wie z.B. Polyvinylalkohol, partiell hydrolysiertes Polyvinylacetat, Cellulose-ether, Polyvinylpyrrolidon und dessen Copolymere, Polyethylenoxid, Salze von Polyacrylsäure, Natrium-alginat, oxidierte Stärke, Gelatine, Casein, Pflanzengummi, Dextrin, Albumin, Dispersionen und Polyacrylaten oder Acrylat-Methacrylat-Copolymeren, Latices von Natur- oder Synthesekautschuk, Poly(meth)acrylamid, Polyvinylether, Polyvinylester, Copolymere von Maleinsäure, Melaminharze, Harnstoffharze oder chemisch modifizierte Polyvinylalkohole, wie in JP-A-61-134 290 oder JP-A-61-134 291 beschrieben.

Man kann dem Bindemittel einen zusätzlichen Farbstoffrezeptor oder ein Beizmittel zusetzen, die die Fixierung des Farbstoffs an die Beschichtung verbessern. Farbstoffrezeptoren für saure Farbstoffe sind kationischer oder amphoterer Natur. Beispiele für kationische Rezeptoren sind polymere Ammoniumverbindungen wie z.B. Polyvinylbenzyl-trimethylammoniumchlorid, Polydiallyl-dimethylammoniumchlorid, Polymethacryloxyethyl-dimethylhydroxyethylammonium-chlorid, Polyvinylbenzyl-methylimidazolium-chlorid, Polyvinylbenzyl-picoliniumchlorid oder Polyvinylbenzyl-tributylammoniumchlorid. Weitere Beispiele sind basische Polymere wie z.B. Poly-(dimethylaminoethyl)methacrylat, Polyalkylenpolyamine und deren Kondensationsprodukte mit Dicyandiamid, Amin-Epichlorhydrin-Polykondensate oder die in den JP-A-57-36 692, 57-64 591, 57-187 289, 57-191 084, 58-177 390, 58-208 357, 59-20 696, 59-33 176, 59-96 987, 59-198 188, 60-49 990, 60-71 796, 60-72 785, 60-161 188, 60-187 582, 60-189 481, 60-189 482, 61-14 979, 61-43 593, 61-57 379, 61-57 380, 61-58 788, 61-61 887, 61-63 477, 61-72 581, 61-95 977, 61-134 291, 62-37 181 oder in den US-A-4 547 405 und 4 554 181 sowie in der DE-A-3 417 582 beschriebenen Verbindungen. Ein Beispiel für amphotere Farbstoff-Rezeptoren ist Gelatine.

Die farbstoffaffine Beschichtung kann eine Reihe weiterer Additive enthalten, wie z.B. Antioxidantien, weitere Lichtschutzmittel (darunter auch UV-Absorber, die nicht den erfindungsgemässen Lichtschutzmittel entsprechen), Viskositätsverbesserer, optische Aufheller, Biocide und/oder Antistatika.

Beispiele für geeignete Antioxidantien sind insbesondere sterisch gehinderte Phenole und Hydrochinone, wie z.B. die in GB-A-2 088 777, oder den JP-A-60-72 785, 60-72 786 und 60-71 796 aufgeführten Antioxidantien.

Beispiele für geeignete Lichtschutzmittel sind insbesondere organische Nickelverbindungen und sterisch gehinderte Amine, wie z.B. die in den JP-A-58-152 072, 61-146 591, 61-163 886, 60-72 785 und 61-146 591 oder die in der GB-A-2 088 777, JP 59-169 883 und 61-177 279 erwähnten Lichtschutzmittel.

Geeignete UV-Absorber, die in Kombination mit Verbindungen der Formel (1) einer Beschichtungsmasse zugesetzt werden können, sind z.B. in Research Disclosure Nr. 24239 (1984) Seite 284, GB-A-2 088 777 und EP-A-0 280 650 beschrieben. Besonders die UV-Absorber der 2-Hydroxyphenylbenztriazol-Klasse und ganz besonders 2-(2'-Hydroxy-3',5'-di-t-amylphenyl)-benzotriazol und 2-(2'-Hydroxy-3'-t-butyl-5'-polyglykolpropionat-phenyl)-benztriazol sind für die Verwendung gemeinsam mit Verbindungen der Formel (1) in Aufzeichungsmaterialien für den Tintenstrahldruck geeignet. Die UV-Absorber können als Emulsion oder als Dispersion der Beschichtungsmasse zugegeben werden. Handelt es sich bei der Verbindung der Formel (1) um eine Säure, so kann diese durch Zugabe einer Lauge in der Beschichtungsmasse gelöst werden. Verbindungen der Formel (1), die keine Säuren sind, können entweder direkt in der Beschichtungsmasse gelöst werden oder ihr in Form einer Emulsion oder Suspension zugesetzt werden.

Die Beschichtungsmasse wird in der Regel auf den Träger, z.B. Papier, aufgetragen und durch Erhitzen getrocknet. Die Verbindungen der Formel (1) können, wie bereits erwähnt, auch in einem separaten Arbeitsgang, allein oder zusammen mit anderen, bereits beschriebenen Komponenten, als wässrige Lösung auf das Aufzeichnungsmaterial gebracht werden. Das Aufbringen kann durch Besprühen, Verleimen in einer Verleimungspresse, einem getrennten Giessvorgang oder durch Eintauchen in eine Wanne erfolgen. Nach einer solchen Nachbehandlung des Aufzeichnungsmaterials ist ein zusätzlicher Trocknungsvorgang nötig.

Das Aufzeichnungsmaterial enthält vorzugsweise 1 bis 10000 mg/m², insbesondere 50 bis 2000 mg/m², mindestens einer Verbindung der Formel (1).

Von den erfindungsgemäss verwendeten Verbindungen der Formel (1) sind jene der Formel 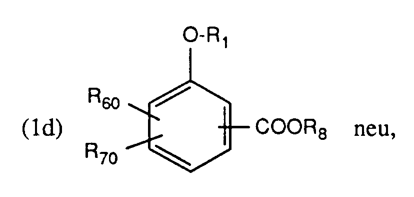
wobei
R₁, R₈, R₆₀ und R₇₀ die angegebenen Bedeutungen haben.

Die erfindungsgemässen Verbindungen eignen sich gut als Stabilisatoren für Farbstoffe in Tinten, insbesondere Tinten für das Tintenstrahldruckverfahren sowie in den damit hergestellten Drucken.

Die erfindungsgemässen Verbindungen lassen sich auf an sich übliche Weise herstellen, beispielsweise durch Veresterung von an sich bekannten Benzoesäurederivaten mit entsprechenden Alkoholen, Umesterung von Benzoesäuremethylestern oder, falls das Molekül keine Hydroxylgruppen aufweist, Umsetzung der Benzoesäurederivate mit Säurechloriden.

Die folgenden Beispiele erläutern die Erfindung, ohne sie darauf zu beschränken. Teile und Prozente beziehen sich auf das Gewicht, sofern nicht anders angegeben.

Beispiel 1: Es werden Beschichtungsmassen auf der Basis SiO₂/Polyvinylalkohol mit und ohne Stabilisator der Formel (1) hergestellt. Zu jeweils 14,2 g einer 10%-igen Lösung von Polyvinylalkohol werden 0,2 g einer 10%-igen Lösung von Invadin JFC Netzmittel (Ciba-Geigy AG), 0,4 g Polyfix 601 als Beizmittel (Showa High Polymer Co.), 0,22 g Stabilisator der Formel (1) und 20,7 g Wasser zugegeben. 10%-ige Lithiumlauge wird tropfenweise zugegeben bis der Stabilisator sich bei einem pH-Wert von etwa 7 gelöst hat. Anschliessend werden 2,0 g Silika (Syloid Typ 244, W.R. Grace Co.) zugesetzt und mit Hilfe von Ultraschall dispergiert. Die resultierende Beschichtungsmasse wird durch ein Sieb aus Polyesterfasern mit der Maschenweite 24 »m filtriert. Der pH-Wert wird durch Zusatz von 2N Lithiumlauge auf 7,0 eingestellt. Die Blindprobe ohne Stabilisator enthält anstelle von 0,22 g Stabilisator die gleiche Menge Wasser.

Die Beschichtungsmassen werden mit einer Drahtspirale auf photographisches Papier in einer Dicke von 50 »m aufgetragen. Die nach dem Trocknen mit warmer Luft erhaltene Beschichtung hat eine Trockenmasse von etwa 5,3 g/m² (bzw. 5,0 g/m² ohne Stabilisator) und enthält 0,3 g/m² Stabilisator.

Das so präparierte Aufzeichnungsmaterial wird jeweils mit einer gelben, einer schwarzen und einer purpurroten Tinte in einer sogenannten "Think-jet"-Tintenstrahldruckvorrichtung (Hewlett-Packard) bedruckt. Die gelbe Tinte enthält:
4 Teile C.I. Acid Yellow 23, 48 Teile Diäthylenglykol und 48 Teile Wasser.

Die purpurroten bzw. schwarzen Tinten werden analog hergestellt, jedoch unter Verwendung von C.I. Acid Red 249 bzw. C.I. Food Black 2.

Die Tinten werden durch einen Ultrafilter mit 0,3 »m Porenweite filtriert und in die Tintenpatronen der "Think-jet"-Vorrichtung gefüllt. Es werden bedruckte Proben mit einer Punktdichte von 75 x 75 Punkten pro cm² hergestellt.

Nach einer Woche Lagerung, um die Tinten völlig auszutrocknen, wird die Farbdichte (Intensität) der bedruckten Proben mit einem Densitometer (Macbeth TR 924) unter Verwendung eines Status A-Filters bestimmt. Dann werden die Probedrucke in einem Atlas Weather-o-meter mit einer Xenon-Lampe einer Beleuchtungsstärke von 81 klux hinter einem Filter aus 6 mm dickem Fensterglas bestrahlt. Anschliessend wird erneut die Farbdichte gemessen, um den prozentualen Verlust an Farbdichte zu ermitteln.

Die Ergebnisse sind in den nachfolgenden Tabellen 1-3 zusammengefasst. Niedrigere Werte bedeuten höhere Lichtechtheit. Die Bestrahlungsenergien, angegeben in kJ/cm², beziehen sich auf den Wellenlängenbereich von 300 bis 800 nm.

**Tabelle 1**

| Probe | Stabilisator | Farbdichteverlust (%) | | |
|---|---|---|---|---|
| | | Acid Yellow 23 nach 10 kJ/cm² | Acid Red 249 nach 10 kJ/cm² | Food Black 2 nach 60 kJ/cm² |
| 1 | keiner | 51 | 50 | 27 |
| 2 | 3,5-Di-t-butyl-4-methoxybenzoesäure | 39 | 41 | 24 |
| 3 | 3-t-Butyl-4-hydroxybenzoesäure | 28 | 29 | 20 |

**Tabelle 2**

| Probe | Stabilisator | Farbdichteverlust (%) |
|---|---|---|
| | | Food Black 2 nach 60 kJ/cm² |
| 1 | keiner | 36 |
| 2 | 2-Methoxybenzoesäure | 24 |
| 3 | 2-Ethoxybenzoesäure | 22 |
| 4 | 4-Methoxybenzoesäure | 21 |
| 5 | 4-Ethoxybenzoesäure | 21 |
| 6 | 4-Hydroxybenzoesäure | 18 |

**Tabelle 3**

| Probe | Stabilisator | Farbdichteverlust (%) | | |
|---|---|---|---|---|
| | | Acid Yellow 23 nach 15 kJ/cm² | Acid Red 249 nach 15 kJ/cm² | Food Black 2 nach 30 kJ/cm² |
| 1 | keiner | 69 | 72 | 18 |
| 2 | Salicylsäure | 31 | 40 | 10 |
| 3 | 3-Hydroxybenzoesäure | 35 | 51 | 13 |

Beispiel 2: Beispiel 2 wird wie Beispiel 1 durchgeführt. Die Tinte enthält jedoch als Farbstoff Acid Blue 9.

**Tabelle 4**

| Probe | Stabilisator | Farbdichteverlust (%) |
|---|---|---|
| | | Acid Blue 9 nach 5 kJ/cm² |
| 1 | kein | 61 |
| 2 | 3-t-Butyl-4-hydroxybenzoesäure | 43 |

Die Beispiele zeigen, dass die erfindungsgemäss verwendeten Verbindungen Tintenfarbstoffe nachhaltig stabilisieren können.

Beispiel 3: Beispiel 3 wird wie Beispiel 1 durchgeführt, man verwendet jedoch eine handelsübliche Magentatinte für den Tintenstrahldruck (konzentrierteste der 3 Magenta-Tinten aus einer Tintenpatrone für den 1K-8C-Tintenstrahldrucker von Canon; in den folgenden Beispielen mit "1K-8C" bezeichnet).

**Tabelle 5**

| Probe | Stabilisator | Farbdichteverlust (%) nach 5 kJ/cm² |
|---|---|---|
| 1 | keine | 50 |
| 2 | 2-Methoxybenzoesäure | 25 |
| 3 | 3-tert.Butyl-4-hydroxy-benzoesäure | 24 |

Beispiel 4: Es wird eine Beschichtungsmasse wie in Beispiel 1 hergestellt, die 45 Teile Polyvinylalkohol und 55 Teile Silika (Syloid, Typ 244, W.R. Grace Co.) enthält. Nach Neutralisation der Masse mit Lithiumhydroxid wird ein polyäthylenbeschichteter Papierträger mit einem Giessgewicht von 8 g/m² beschichtet.

Tinten für den Tintenstrahldruck werden hergestellt, enthaltend:

| | | |
|---|---|---|
| Farbstoff (C.I. Acid Yellow 23) | 4,0 g | 4,0 g |
| Stabilisator | 0,0 g | 10,0 g |
| Deionisiertes Wasser | 48,0 g | 43,0 g |
| Diäthylenglykol | 48,0 g | 43,0 g |

Analog wird eine Tinte hergestellt, die statt C.I. Acid Yellow 23 dieselbe Menge des Farbstoffs C.I. Acid Red 249 enthält.

Ferner wird eine handelsübliche Magentatinte für den Tintenstrahldruck (1K-8C, Canon) verwendet, die in 10 g 0,4 g Stabilisator enthält.

Mittels eines Quiet-Jet Printers (Hewlett-Packard) werden Drucke (180 Punkte/inch) unter Verwendung der genannten Tinten hergestellt. Die Lichtechtheit der Drucke wird wie in Beispiel 1 angegeben bestimmt. In Tabelle 6 sind die Ergebnisse zusammengestellt.

**Tabelle 6**

| Probe | Stabilisator | Farbdichteverlust (%), 10 kJ/cm² | | |
|---|---|---|---|---|
| | | Acid Yellow 23 | Acid Red 249 | 1K-8C |
| 1 | --- | 37 | 27 | 64 |
| 2 | 3-tert.Butyl-4-hydroxy-benzoesäure* | 9 | 12 | 18 |
| 3 | 4-Hydroxy-3-tert.pentyl-benzoesäure* | 11 | 10 | 16 |
| 4 | 3-tert.Butyl-3-hydroxy-benzoesäure* | 4 | 8 | 15 |
| 5 | 3-(5'-Carboxy-2'-methylpent-2'-yl)-4-hydroxy-benzoesäure* | 17 | 18 | 30 |
| 6 | 4-Hydroxy-3-tert.octyl-benzoesäure* | 11 | 11 | 16 |
| 7 | 4-Hydroxy-3-(1'-methyl-1'-phenyl-äthyl)-benzoesäure* | 17 | 12 | 20 |

| | | | | |
|---|---|---|---|---|
| * in Form des Lithiumsalzes | | | | |

Beispiel 5: Die Verwendung kationischer Beizmittel ist üblich, um die Wasserbeständigkeit von Tintenstrahldrucken zu verbessern. Dadurch wird aber die Lichtbeständigkeit beträchtlich verringert. Die erfindungsgemäss verwendeten Verbindungen erweisen sich auch in Gegenwart von kationischen Beizmitteln als wirksame Stabilisatoren.

Die im Beispiel 4 verwendete Beschichtungsmasse wird zusätzlich mit einem Beizmittel (0,3 g/m² Polyfix 601, Showa High Polymer Co.) versehen. Diese Beschichtungsmasse wird auf einem Papierträger aufgebracht und wie im Beispiel 4 beschrieben bedruckt und belichtet. Die Lichtbeständigkeit der Proben ist in Tabelle 7 wiedergegeben.

**Tabelle 7**

| Probe | Stabilisator | Farbdichteverlust (%), 10 kJ/cm² | | |
|---|---|---|---|---|
| | | Acid Yellow 23 | Acid Red 249 | 1K-8C |
| 1 | --- | 58 | 60 | 49 |
| 2 | 3-tert.Butyl-4-hydroxy-benzoesäure* | 20 | 15 | 28 |
| 3 | 4-Hydroxy-3-tert.pentyl-benzoesäure* | 21 | 15 | 27 |
| 4 | 3-tert.Butyl-3-hydroxy-benzoesäure* | 13 | 15 | 26 |
| 5 | 3-(5'-Carboxy-2'-methylpent-2'-yl)-4-hydroxy-benzoesäure* | 19 | 27 | 36 |
| 6 | 4-Hydroxy-3-tert.octyl-benzoesäure* | 18 | 16 | 26 |
| 7 | 4-Hydroxy-3-(1'-methyl-1'-phenyl-äthyl)-benzoesäure* | 20 | 14 | 29 |

| | | | | |
|---|---|---|---|---|
| * in Form des Lithiumsalzes | | | | |

Beispiel 6: Die in Beispiel 4 und 5 in Tinten verwendeten Stabilisatoren werden gemäss Beispiel 1 in ein Aufzeichnungsmaterial für den Tintenstrahldruck eingearbeitet. Das Material wird bedruckt, getrocknet und wie beschrieben belichtet, um den Farbdichteverlust zu bestimmen. Die Ergebnisse sind in Tabelle 8 wiedergegeben.

**Tabelle 8**

| Probe | Stabilisator | Farbdichteverlust (%), 10 kJ/cm² | |
|---|---|---|---|
| | | Acid Yellow 23 | Acid Red 249 |
| 1 | --- | 59 | 67 |
| 2 | 3-tert.Butyl-4-hydroxy-benzoesäure* | 36 | 21 |
| 3 | 4-Hydroxy-3-tert.pentyl-benzoesäure* | 34 | 19 |
| 4 | 3-tert.Butyl-3-hydroxy-benzoesäure* | 31 | 20 |
| 5 | 3-(5'-Carboxy-2'-methylpent-2'-yl)-4-hydroxy-benzoesäure* | 30 | 22 |
| 6 | 4-Hydroxy-3-tert.octyl-benzoesäure* | 30 | 15 |
| 7 | 4-Hydroxy-3-(1'-methyl-1'-phenyl-äthyl)-benzoesäure* | 25 | 16 |

| | | | |
|---|---|---|---|
| * in Form des Lithiumsalzes | | | |

Beispiel 7: 16,36 g Polyvinylalkohol (10 %) werden mit 2,0 g Silika und 0,22 g Stabilisator und Wasser gemischt und mit Lithiumhydroxid neutralisiert. Diese Lösung wird mit einem Giessgewicht von 5,3 g/m² (5,0 g/m², wenn kein Stabilisator verwendet wird) auf einen polyäthylenbeschichteten Papierträger aufgebracht. Nach dem Trocknen werden die Beschichtungen mit Tinte enthaltend Acid Red 249 als Farbstoff wie im Beispiel 1 beschrieben bedruckt und belichtet. Die Ergebnisse gibt Tabelle 9 wieder.

**Tabelle 9**

| Probe | Stabilisator | Farbdichteverlust (%), 10 kJ/cm² |
|---|---|---|
| 1 | --- | 50 |
| 2 | 4-tert.Butyl-3-hydroxybenzoesäure-polyäthylenglykol(350)monomethylätherester | 33 |
| 3 | 4-tert.Butyl-3-hydroxybenzoesäure-polyäthylenglykol(600)ester | 32 |
| 4 | 4-tert.Butyl-3-hydroxybenzoesäure-polyäthylenglykol(350)ester | 33 |

Beispiel 8: Herstellung von 3-tert.Butyl-4-hydroxybenzoesäure-polyäthylenglykolmono-methyläther(350)ester
10 g 3-tert.Butyl-4-hydroxybenzoesäuremethylester werden in 20 ml Xylen und 18,5 g Polyäthylenglykolmonomethyläther (350) gelöst. Die Lösung wird mit 0,25 g Natriummethanolat versetzt und 48 Stunden bei 135°C gerührt. Nach Entfernen des Lösungsmittels wird der Rückstand in gesättigter Natriumchloridlösung suspendiert. Man extrahiert mit Essigester, trocknet die organische Phase, engt ein und reinigt die Verbindung chromatographisch. Man erhält 11,0 g des Produkts in Form eines leicht gelblichen Oels.

Beispiel 9: Herstellung von 4-Acetoxy-3-tert.butyl-benzoesäure
Eine Mischung von 82,0 g 2-tert.Butyl-4-methylphenol, 140,0 g Essigsäureanhydrid und 3,0 g Bromwasserstoffsäure (48%ig) wird 1 Stunde bei 90°C erhitzt. Nach Zugabe von 280,0 g Essigsäure, 2,5 g Kobalt-II-acetat (Tetrahydrat) und 2,5 g Mangan-II-bromid (Tetrahydrat) wird Sauerstoff (30 ml/min) durch die Lösung bei 110°C durchgeleitet. Die Essigsäure wird teilweise durch Anlegen von Vakuum entfernt. Die verbleibende Reaktionsmischung wird in 500 ml Wasser gegossen und filtriert. Man erhält 99,5 g (84 %) des Produkts in Form farbloser Kristalle mit einem Schmelzpunkt von 180 bis 182°C.

Beispiel 10: Herstellung von 3-Acetoxy-4-tert.butyl-benzoesäure
Die Oxidation von 32,8 g 2-tert.Butyl-5-methylphenol nach der im Beispiel 9 genannten Vorschrift ergibt 34,5 g (73 %) des Produkts in Form farbloser Kristalle mit einem Schmelzpunkt von 141 bis 143°C.

Beispiel 11: Herstellung von 4-Acetoxy-3-tert.pentyl-benzoesäure
Die Oxidation von 35,7 g 5-Methyl-2-tert.pentyl-phenol nach der im Beispiel 9 angegebenen Weise ergibt 13,7 g (27,5 %) des Produkts in Form farbloser Kristalle mit einem Schmelzpunkt von 164 bis 166°C.

Beispiel 12: Herstellung von 4-Acetoxy-3-tert.octyl-benzoesäure
Die Oxidation von 44,0 g 4-Methy-2-tert.octyl-phenol nach Beispiel 9 ergibt 45,1 g (77 %) des Produkts in Form farbloser Kristalle mit einem Schmelzpunkt von 151 bis 155°C.

Beispiel 13: Herstellung von 4-Acetoxy-3-(1-methyl-1-phenyl-äthyl)-benzoesäure
Die Oxidation von 45,2 g 4-Methyl-3-(1-methyl-1-phenyl-äthyl)-phenol nach Beispiel 9 ergibt 44,1 g (74 %) des Produkts in Form farbloser Kristalle mit einem Schmelzpunkt von 195 bis 199°C.

Beispiel 14: Herstellung von 4-Acetoxy-3-(5'-methoxycarbonyl-2'-methyl-pent-2'-yl)benzoesäure
Die Oxidation von 42,6 g 2-(5'-Methoxycarbonyl-2'-methyl-pent-2'-yl)-4-methyl-phenol nach Beispiel 9 ergibt 27,1 g (49 %) des Produkts in Form farbloser Kristalle mit einem Schmelzpunkt von 106 bis 108°C.

Beispiel 15: Herstellung von 3-tert.Butyl-4-hydroxy-benzoesäure
Man löst 50,0 g 4-Acetoxy-3-tert.butyl-benzoesäure in 200 g Methanol. Eine Lösung von 10,2 g Natriumhydroxid in 180 ml Wasser wird hinzugefügt. Die Mischung wird 3 Stunden lang am Rückfluss erhitzt. Nach Entfernen des Methanols wird mit Salzsäure (10 %) bei 10°C angesäuert Der Niederschlag wird abfiltriert und gewaschen. Man erhält 40,6 g Produkt in Form farbloser Kristalle mit einem Schmelzpunkt von 158 bis 159°C.

Beispiel 16: Herstellung von 4-tert.Butyl-3-hydroxy-benzoesäure
Nach der Methode gemäss Beispiel 15 erhält man aus 30,0 g 3-Acetoxy-4-tert.butyl-benzoesäure 22,8 g (90 %) Produkt in Form farbloser Kristalle mit einem Schmelzpunkt von 188 bis 190°C.

Beispiel 17: Herstellung von 4-Hydroxy-3-tert.pentyl-benzoesäure
Nach der Methode gemäss Beispiel 15 erhält man aus 20,0 g 4-Acetoxy-3-tert.pentyl-benzoesäure 16,8 g (95 %) 4-Hydroxy-3-tert.pentyl-benzoesäure in Form farbloser Kristalle mit einem Schmelzpunkt von 139 bis 142°C.

Beispiel 18: Herstellung von 4-Hydroxy-3-tert.octyl-benzoesäure
Nach der Methode gemäss Beispiel 15 erhält man aus 20,0 g 4-Acetoxy-3-tert.octyl-benzoesäure 16,0 g (93 %) 4-Hydroxy-3-tert.octyl-benzoesäure in Form farbloser Kristalle mit einem Schmelzpunkt von 209 bis 210°C.

Beispiel 19: Herstellung von 4-Hydroxy-3-(1-methyl-1-phenyl-äthyl)-benzoesäure
Nach der Methode gemäss Beispiel 15 erhält man aus 20,0 g 4-Acetoxy-3-(1-methyl-1-phenyl-äthyl)-benzoesäure 15,8 g (93 %) 4-Hydroxy-3-(1-methyl-1-phenyl-äthyl)-benzoesäure in Form farbloser Kristalle mit einem Schmelzpunkt von 134 bis 135°C.

Beispiel 20: Herstellung von 4-Hydroxy-3-(5'-carboxy-2'-methyl-pent-2'-yl)-benzoesäure
Eine Lösung von 10,0 g 4-Acetoxy-3-(5'-methoxycarbonyl-2'-methyl-pent-2'-yl)-benzoesäure in 35 g Methanol wird mit einer Lösung von 8,0 g Kaliumhydroxid in 100 ml Wasser versetzt. Nach 7 stündigem Erhitzen unter Rückfluss lässt man abkühlen, verdünnt mit 200 ml Wasser, das mit konzentrierter Salzsäure angesäuert ist, und extrahiert mit Aethylacetat. Man trocknet mit Magnesiumsulfat, entfernt das Lösungsmittel und kristallisiert den Rückstand aus wässrigem Aethanol um. Man erhält 6,9 g (83 %) 4-Hydroxy-3-(5'-carboxy-2'-methyl-pent-2'-yl)-benzoesäure vom Schmelzpunkt 213 bis 219°C.

## Patentansprüche

1. Tinte, enthaltend mindestens eine wasserlösliche Verbindung der Formel 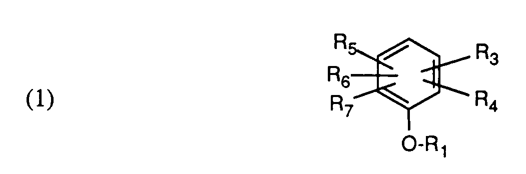 worin
R₁ Wasserstoff, Alkyl mit 1 bis 4 Kohlenstoffatomen, Allyl oder -CO-CH₃ ist,
R₃ und R₄ unabhängig voneinander Wasserstoff oder -CO₂^{⊖}M^{⊕} und
R₅, R₆ und R₇ unabhängig voneinander Wasserstoff, Alkyl mit je 1 bis 8 Kohlenstoffatomen, mit -CO₂R₈, CO₂^{⊖}M^{⊕} oder Phenyl substituiertes Alkyl mit je 1 bis 8 Kohlenstoffatomen oder -CO₂R₈ sind,
R₈ eine Gruppe der Formel 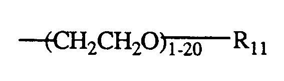 ist, worin R₁₁ Wasserstoff, Alkyl mit 1 bis 4 Kohlenstoffatomen oder eine Gruppe der Formel 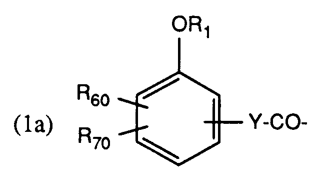 ist,
worin R₁ die angegebenen Bedeutungen hat, Y eine direkte Bindung oder Alkylen mit 1 bis 8 Kohlenstoffatomen ist, und R₆₀ und R₇₀ unabhängig voneinander Wasserstoff oder Alkyl mit je 1 bis 8 Kohlenstoffatomen sind,
M^{⊕} ein ein-, zwei- oder dreiwertiges Metallkation, H^{⊕} oder eine Gruppe der Formel ^{⊕}N(R₁₇)(R₁₂)(R₁₃)(R₁₄) ist, worin R₁₇, R₁₂, R₁₃ und R₁₄ unabhängig voneinander Wasserstoff, Alkyl je mit 1 bis 8 Kohlenstoffatomen, mit 1 bis 3 Hydroxylgruppen substituiertes oder durch Sauerstoff unterbrochenes Alkyl mit 2 bis 8 Kohlenstoffatomen, Alkenyl mit je 3 bis 5 Kohlenstoffatomen oder Benzyl sind, wobei mindestens einer der Substituenten R₃ bis R₇ -CO₂^{⊖}M^{⊕} oder -CO₂R₈ ist.

2. Tinte nach Anspruch 1, worin in der Verbindung der Formel (1) R₁ Wasserstoff oder Alkyl mit 1 bis 4 Kohlenstoffatomen ist, R₃ und R₄ unabhängig voneinander Wasserstoff oder -CO₂^{⊖}M^{⊕}, R₅, R₆ und R₇ unabhängig voneinander Wasserstoff, Alkyl mit je 1 bis 8 Kohlenstoffatomen oder mit -CO₂^{⊖}M^{⊕} oder Phenyl substituiertes Alkyl mit je 1 bis 8 Kohlenstoffatomen sind, und M^{⊕} ein einwertiges Metallkation oder H^{⊕} ist.

3. Tinte nach Anspruch 1, worin in der Verbindung der Formel (1) R₁, R₃, R₅ und R₆ Wasserstoff sind, und R₇ Alkyl mit 1 bis 8 Kohlenstoffatomen und R₄ -CO₂^{⊖}M^{⊕} ist.

4. Tinte nach Anspruch 1 der Formel 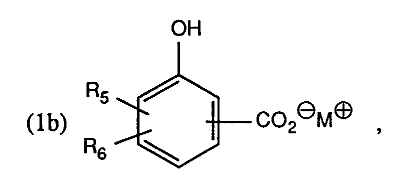 worin R₅, R₆ und M^{⊕} die in Anspruch 1 angegebenen Bedeutungen haben.

5. Tinte nach Anspruch 1 der Formel 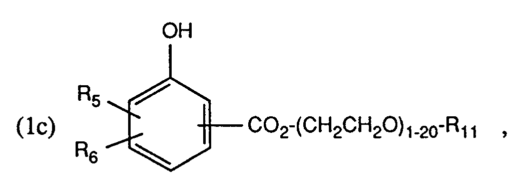 worin R₅ und R₆ die in Anspruch 1 angegebenen Bedeutungen haben, und R₁₁ Wasserstoff oder Methyl ist.

6. Verwendung der Tinte nach einem der Ansprüche 1 bis 5 im Tintenstrahldruckverfahren.

7. Aufzeichungsmaterial für das Tintenstrahldruckverfahren, das mindestens eine nach den Ansprüchen 1 bis 5 verwendete Verbindung der Formel (1) enthält.

8. Verfahren zum Stabilisieren von Tintenstrahldrucken, dadurch gekennzeichnet, dass man auf ein Aufzeichnungsmaterial für den Tintenstrahldruck als Tinte eine wässrige Lösung, die einen wasserlöslichen Farbstoff und mindestens eine Verbindung der Formel (1) enthält, aufbringt und trocknet.

9. Verfahren zum Stabilisieren von Tintenstrahldrucken, dadurch gekennzeichnet, dass man auf ein Aufzeichnungsmaterial für den Tintenstrahldruck, das mindestens eine Verbindung der Formel (1) enthält, als Tinte eine wässrige Lösung, die einen wasserlöslichen Farbstoff enthält, aufbringt und trocknet.

10. Verbindungen der Formel 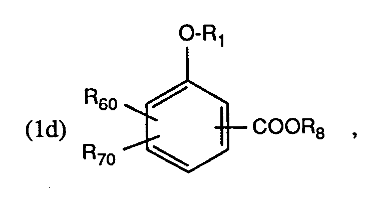 worin R₁, R₈, R₆₀ und R₇₀ die in Anspruch 1 angegebenen Bedeutungen haben.

## Claims

1. An ink which contains at least one water-soluble compound of the formula 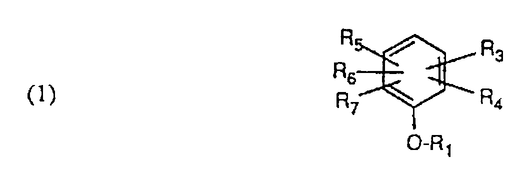 in which R₁ is hydrogen, alkyl having 1 to 4 carbon atoms, allyl or -CO-CH₃, R₃ and R₄, independently of one another, are hydrogen or -CO₂^{⊖}M^{⊕,} and R₅, R₆ and R₇, independently of one another, are hydrogen, alkyl in each case having 1 to 8 carbon atoms which is unsubstituted or substituted by -CO₂R₈, -CO₂^{⊖}M^{⊕} or phenyl, or are -CO₂R₈ where R₈ is a group of the formula (̵CH₂CH₂O)̵₁₋₂₀-R₁₁ in which R₁₁ is hydrogen, alkyl having 1 to 4 carbon atoms or a group of the formula 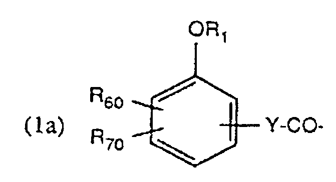 in which R₁ is as defined above, Y is a direct bond or alkylene having 1 to 8 carbon atoms, and R₆₀ and R₇₀, independently of one another, are hydrogen or alkyl in each case having 1 to 8 carbon atoms,
M^{⊕} is a monovalent, divalent or trivalent metal cation, H^{⊕} or a group of the formula ^{⊕}N(R₁₇)(R₁₂)(R₁₃)(R₁₄) in which R₁₇, R₁₂, R₁₃ and R₁₄,
independently of one another, are hydrogen, alkyl in each case having 1 to 8 carbon atoms, alkyl having 2 to 8 carbon atoms which is substituted by 1 to 3 hydroxyl groups or is interrupted by oxygen, alkenyl in each case having 3 to 5 carbon atoms or benzyl, at least one of the substituents R₃ to R₇ being -CO₂^{⊖}M^{⊕} or -CO₂R₈.

2. An ink according to claim 1, in which, in the compound of the formula (1), R₁ is hydrogen or alkyl having 1 to 4 carbon atoms, R₃ and R₄, independently of one another, are hydrogen or -CO₂^{⊖}M^{⊕}, R₅, R₆ and R₇, independently of one another, are hydrogen, alkyl in each case having 1 to 8 carbon atoms which is unsubstituted or substituted by -CO₂^{⊖}M^{⊕} or phenyl, and M^{⊕} is a monovalent metal cation or H^{⊕.}

3. An ink according to claim 1, in which, in the compound of the formula (1), R₁, R₃, R₅ and R₆ are hydrogen, R₇ is alkyl having 1 to 8 carbon atoms, and R₄ is -CO₂^{⊖}M^{⊕}.

4. An ink according to claim 1 of the formula 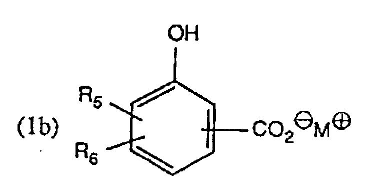 in which R₅, R₆ and M^{⊕} are as defined in claim 1.

5. An ink according to claim 1, of the formula 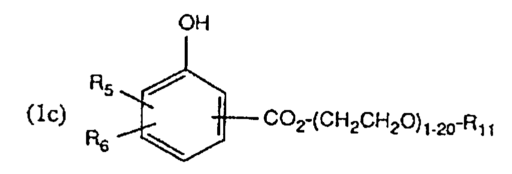 in which R₅ and R₆ are as defined in claim 1, and R₁₁ is hydrogen or methyl.

6. The use of an ink according to any one of claims 1 to 5 in ink-jet printing.

7. A recording material for ink-jet printing, which contains at least one compound of the formula (1) used according to any of claims 1 to 5.

8. A process for stabilizing ink-jet prints, which comprises applying, as ink, an aqueous solution containing a water-soluble dye and at least one compound of the formula (1) to a recording material for ink-jet printing, and drying the ink.

9. A process for stabilizing ink-jet prints, which comprises applying, as ink, an aqueous solution containing a water-soluble dye to a recording material for ink-jet printing which contains at least one compound of the formula (1), and drying the ink.

10. A compound of the formula 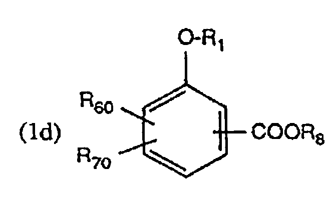 in which R₁, R₈, R₆₀ and R₇₀ are as defined in claim 1.

## Revendications

1. Encre contenant au moins un composé hydrosoluble de formule 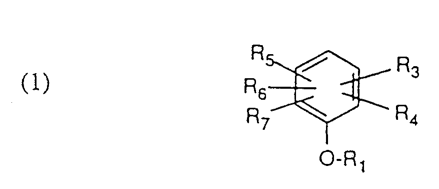 dans laquelle,
R₁ représente un atome d'hydrogène, un groupe alkyle ayant 1 à 4 atomes de carbone, un groupe allyle ou - CO-CH₃,
R₃ et R₄ représentent chacun, indépendamment l'un de l'autre, un atome d'hydrogène ou un groupe CO₂⁻M^{⊕}, et
R₅, R₆ et R₇ représentent chacun, indépendamment l'un de l'autre, un atome d'hydrogène, un groupe alkyle ayant chacun 1 à 8 atomes de carbone, un groupe alkyle substitué par -CO₂R₈, par -CO₂⁻M^{⊕} ou par un reste phényle et comportant chacun 1 à 8 atomes de carbone ou -CO₂R₈,
R₈ représente un groupe de formule -(CH₂CH₂O)₁₋₂₀-R₁₁, dans laquelle R₁₁ représente un atome d'hydrogène, un groupe alkyle ayant 1 à 4 atomes de carbone ou un groupe de formule : 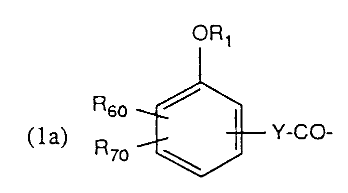
dans laquelle R₁ a le sens indiqué ci-dessus, Y représente une liaison directe ou un groupe alkylène ayant 1 à 8 atomes de carbone, et R₆₀ et R₇₀ représentent chacun, indépendamment l'un de l'autre, un atome d'hydrogène ou un atome d'hydrogène alkyle ayant chacun 1 à 8 atomes de carbone,
M^{⊕} représente un cation de métal monovalent, divalent ou trivalent, H^{⊕} ou un groupe de formule :
^{⊕}N(R₁₇) (R₁₂)(R₁₃)(R₁₄), dans laquelle R₁₇, R₁₂, R₁₃ et R₁₄ représentent chacun , indépendamment l'un de l'autre, un atome d'hydrogène, un groupe alkyle ayant 1 à 8 atomes de carbone, un groupe alkyle substitué par 1 à 3 groupes hydroxyles ou interrompu par de l'oxygène et comportant 2 à 8 atomes de carbone, un groupe alcényle ayant 3 à 5 atomes de carbone ou un groupe benzyle, au moins l'un des substituants à R₇ représentant -CO₂⁻M^{⊕} ou -CO₂R₈.

2. Encre selon la revendication 1, dans laquelle, dans le composé de formule 1, R₁ représente un atome d'hydrogène ou un groupe alkyle ayant 1 à 4 atomes de carbone, R₃ et R₄ représentent chacun, indépendamment l'un de l'autre, un atome d'hydrogène ou un groupe -CO₂⁻M^{⊕}, R₅, R₆, et R₇ représentent chacun, indépendamment l'un de l'autre, un atome d'hydrogène, un groupe alkyle ayant 1 à 8 atomes de carbone ou un groupe alkyle ayant 1 à 8 atomes de carbone et substitué par -CO₂⁻M^{⊕} ou par un groupe phényle et M^{⊕} représente un cation de métal monovalent ou H^{⊕.}

3. Encre selon la revendication 1, dans laquelle dans le composé de formule (1), R₁, R₃, R₅ et R₆ représentent chacun un atome d'hydrogène et R₇ représente un groupe alkyle ayant 1 à 8 atomes de carbone et R₄ représente -CO₂⁻M^{⊕}.

4. Encre selon la revendication 1, de formule 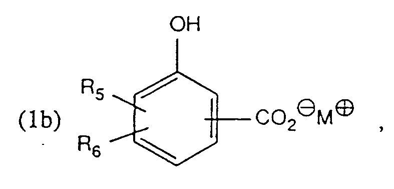 dans laquelle R₅, R₆ et M^{⊕} ont les sens indiqués à la revendication 1.

5. Encre selon la revendication 1, de formule 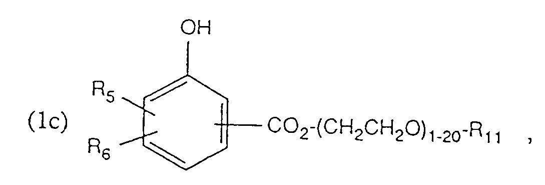 dans laquelle R₅ et R₆ ont les sens indiqués à la revendication 1 et R₁₁ représente un atome d'hydrogène ou un groupe méthyle.

6. Utilisation des encres selon l'une des revendications 1 à 5, dans un procédé d'impression par jet d'encre.

7. Matériau pour enregistrement pour un procédé d'impression par jet d'encre, ce matériau contenant au moins un composé de formule (1) utilisé selon les revendications 1 à 5.

8. Procédé pour stabiliser les impressions par jet d'encre, caractérisé en ce qu'on applique sur un matériau d'enregistrement pour impression par jet d'encre, comme encre, une solution aqueuse contenant un colorant hydrosoluble et au moins un composé de formule (1), et l'on sèche.

9. Procédé pour stabiliser des impressions par jet d'encre, caractérisé en ce qu'on applique sur un matériau pour enregistrement d'une impression par jet d'encre, qui contient au moins un composé de formule (1), comme encre une solution contenant un colorant hydrosoluble et l'on sèche.

10. Composés de formule 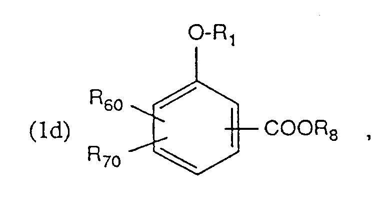 dans laquelle R₁, R₈, R₆₀ et R₇₀ ont les sens indiqués à la revendication 1.
